# EUROPÄISCHE PATENTSCHRIFT

(11) **EP 3 440 327 B1**
(45) Veröffentlichungstag und Bekanntmachung des Hinweises auf die Patenterteilung: **01.01.2020**
(21) Anmeldenummer: 17711638.1
(22) Anmeldetag: 16.03.2017
(51) Int. Cl.: F01N 13/18, F16B 5/02, B60R 13/08

(54) **BEFESTIGUNGSVORRICHTUNG FÜR EINE ENTKOPPLUNGSVORRICHTUNG AN EINEM HITZESCHILD**
DEVICE FOR ATTACHING A VIBRATION ISOLATING MECHANISM TO A HEAT SHIELD
DISPOSITIF DE FIXATION D'UN MÉCANISME POUR ISOLER DES VIBRATIONS SUR UN ÉCRAN THERMIQUE

(30) Priorität: 05.04.2016 DE 102016106152
(43) Veröffentlichungstag der Anmeldung: 13.02.2019
(73) Patentinhaber: ElringKlinger AG, 72581 Dettingen/Erms (DE)
(72) Erfinder: HEISELBETZ, Gerald, 90579 Langenzenn (DE)
(74) Vertreter: Oberdorfer, Jürgen
(86) Internationale Anmeldenummer: PCT/EP2017/056276
(87) Internationale Veröffentlichungsnummer: WO 2017/174324

(56) Entgegenhaltungen:
- EP-A1- 2 481 640
- DE-U1-202011 001 961
- US-A1- 2002 071 765
- US-A1- 2013 034 377

## Beschreibung

Die Erfindung betrifft eine Befestigungsvorrichtung zur Befestigung einer Entkopplungsvorrichtung bezüglich eines Lochrands einer Lochausnehmung eines Abschirmteils nach dem Oberbegriff des Anspruchs 1. Des Weiteren betrifft die Erfindung eine Entkopplungsvorrichtung aufweisend die Befestigungsvorrichtung sowie ein Abschirmteil.

Aus der EP 2 481 640 A1 ist eine Befestigungsvorrichtung nach dem Oberbegriff des Anspruchs 1 bekannt.

Eine weitere Befestigungsvorrichtung ist aus der DE 60 2004 002 062 T2 bekannt. Ein Überbrückungselement zur Verbindung einer Hülse mit einem Abschirmteil besitzt in seinem radial äußeren Bereich ein Verbindungsmittel zum Verbinden des Außenrandes des Überbrückungselements mit einem Lochrand des Abschirmteils. Ein solches Verbindungsmittel ist als im Querschnitt s-förmiger Ring offenbart, der einerseits das Überbrückungselement randlich umgreift und andererseits mit einem umgebogenen Kragen den Lochrand umgreift. Die vorgeschlagene Befestigungsvorrichtung benötigt unerwünscht hohen Montageaufwand, da das Verbindungsmittel zunächst mit der Entkopplungsvorrichtung verbunden werden muss und anschließend der Verbund aus Entkopplungsvorrichtung und Verbindungsmittel mit dem Abschirmteil zu verbinden ist. Außerdem tritt im Bereich des Lochrandes eine Vielzahl von Materialdopplungen auf, was insbesondere im Betrieb des Abschirmteils unerwünschte Korrosion fördern kann.

Ausgehend vom genannten Stand der Technik liegt der Erfindung die Aufgabe zugrunde, eine Befestigungsvorrichtung zur Befestigung einer Entkopplungsvorrichtung bezüglich eines Lochrands einer Lochausnehmung eines Abschirmteils anzugeben, welche einfach und kostengünstig herstellbar ist und einen geringen Montageaufwand erfordert.

Diese Aufgabe wird mit einer Befestigungsvorrichtung mit den Merkmalen des Anspruchs 1 gelöst. Vorteilhafte Ausführungsformen der Befestigungsvorrichtung sind in den Unteransprüchen angegeben.

Eine erfindungsgemäße Befestigungsvorrichtung zur Befestigung einer Entkopplungsvorrichtung bezüglich eines Lochrandes einer Lochausnehmung eines Abschirmteils, wobei die Entkopplungsvorrichtung zur schwingungsentkoppelnden Verbindung einer Hülse mit dem Abschirmteil zumindest ein Überbrückungselement besitzt, welches an seinem radialen Außenrand Verbindungsmittel zum befestigenden Verbinden des Außenrandes des Überbrückungselements mit dem Lochrand des Abschirmteils aufweist, ist erfindungsgemäß weitergebildet dadurch, dass die Verbindungsmittel mindestens vier Laschen umfassen, die vom Außenrand des Überbrückungselements radial nach außen über den Außenrand vorstehend abgehen, wobei eine Teilmenge von mindestens zwei Laschen des Überbrückungselements zur Anlage an einer ersten Außenseite des Abschirmteils und eine verbleibende Restmenge von mindestens zwei Laschen zur Anlage an einer gegenüberliegenden zweiten Außenseite des Abschirmteils vorgesehen sind und der Lochrand mit einem Klemmsitz zwischen den Laschen der ersten Teilmenge und den Laschen der Restmenge festlegbar ist.

Bei der Erfindung ist von besonderem Vorteil, dass ein Überbrückungselement, welches einerseits eine schwingungsentkoppelnde Funktion zwischen dem Abschirmteil und der Hülse besitzt andererseits auch zur Ausbildung von Verbindungsmitteln herangezogen ist.

Insoweit entsteht eine Funktionsvereinigung, was dazu führt, dass gegenüber dem Stand der Technik die Befestigungsvorrichtung eine geringere Bauteilanzahl benötigt. Des Weiteren entfallen Montagevorgänge einer zusätzlichen Verbindungseinrichtung zur Anbringung an dem Überbrückungselement.

In einer bevorzugten Ausführungsform ist die Befestigungsvorrichtung derart weitergebildet, dass das Überbrückungselement einteilig, insbesondere einteilig und einlagig aus einer Metallblechlage ausgebildet ist und sowohl die Laschen der Teilmenge wie auch die Laschen der Restmenge bildet, die zueinander in einer Umfangsrichtung U versetzt angeordnet sind und einstückig mit dem Überbrückungselement verbunden sind.

Hierdurch gelingt es, in besonders einfacher Art und Weise ein einlagiges Überbrückungselement randlich außen am Lochrand des Abschirmteils festgelegt zu befestigen.

In einer weiteren Ausführungsform der Erfindung ist das Überbrückungselement mehrteilig, insbesondere mehrlagig aus zumindest einem ersten Einzelteil und zumindest einem zweiten Einzelteil ausgebildet, wobei das erste Einzelteil die Laschen der Teilmenge bildet und das zweite Einzelteil die Laschen der Restmenge bildet.

Bei einem z. B. zweiteiligen Überbrückungselement sind beide Einzelteile des Überbrückungselements vorteilhafter Weise sowohl an der schwingungsentkoppelnden Verbindung der Hülse mit dem Abschirmteil wie auch an der randlich äußeren Befestigung der Entkopplungsvorrichtung am Lochrand beteiligt. Hierdurch können beispielsweise gleichmäßig Beanspruchungen der Einzelteile des Überbrückungselements im Betrieb erreicht werden.

In einer weiteren bevorzugten Ausführungsform bilden in der Umfangsrichtung U gesehen benachbarte Laschen des ersten Einzelteils und in der Umfangsrichtung U gesehen benachbarte Laschen des zweiten Einzelteils jeweils zumindest zwei Lücken, wobei die zumindest zwei Lücken zwischen Laschen des ersten Einzelteils radial und/oder axial von den Laschen des zweiten Einzelteils durchgriffen sind und wobei die zumindest zwei Lücken zwischen den Laschen des zweiten Einzelteils radial und/oder axial von Laschen des ersten Einzelteils durchgriffen sind und die Durchgreifungen der Laschen durch die Lücken radial innerhalb des Lochrandes des Abschirmteils angeordnet sind.

Bei einer derartigen Ausgestaltung der Befestigungsvorrichtung und einer Montage einer solchen Entkopplungsvorrichtung aufweisend diese Ausführungsform der Befestigungsvorrichtung an einem Abschirmteil bilden die Laschen der Einzelteile aufgrund der Durchgreifungen innerhalb des Lochrandes des Abschirmteils und einer außerhalb der Durchgreifung angeordneten Befestigung der Laschen an dem Abschirmteil eine zusätzliche Fixierung der Einzelteile in einer Axialrichtung zueinander. Im Bereich der Durchgreifung stützen sich die Einzelteile gegeneinander ab und bilden somit einen kurzen Weg für einen Kraftfluss. Weiterhin ist durch die Durchgreifung sichergestellt, dass bei einer Übertragung von Axialkräften, die zwischen der Entkopplungsvorrichtung und dem Abschirmteil übertragen werden sollen, stets beide Einzelteile des Überbrückungselements an der Axialkraftübertragung beteiligt sind.

In einer weiteren bevorzugten Ausführungsform der Befestigungsvorrichtung sind in einer Vormontagestellung der Entkopplungsvorrichtung die Laschen der Teilmenge oder die Laschen der Restmenge radial einwärts abgebogen, sodass die Entkopplungsvorrichtung in die Lochausnehmung im Abschirmteil derart einsteckbar ist, dass die anderen sich radial nach außen erstreckenden Laschen an der zugehörigen Außenseite des Abschirmteils zur Anlage bringbar sind. Mit einer derartigen Ausgestaltung gelingt es, die Entkopplungsvorrichtung aufweisend die erfindungsgemäße Befestigungsvorrichtung modulartig vormontierbar zu gestalten und in einem vormontierten Zustand als Ganzes in die zugehörige Ausnehmung im Abschirmteil einzustecken und im eingesteckten Zustand lediglich durch Umbiegen der zunächst radial einwärts abgebogenen Laschen nach außen am Abschirmteil zu befestigen. Eine weitere bevorzugte Ausführungsform der Befestigungsvorrichtung ist dadurch gekennzeichnet, dass die Laschen der Teilmenge und die Laschen der Restmenge in Umfangsrichtung U gesehen abwechselnd aufeinanderfolgend angeordnet sind. Eine derartige Ausgestaltung der Befestigungsvorrichtung sorgt für einen besonders gleichmäßigen Krafteintrag von Haltekräften in den Lochrand des Abschirmteils oder umgekehrt vom Lochrand des Abschirmteils in die Entkopplungsvorrichtung. Eine weitere vorteilhafte Ausgestaltung der Befestigungsvorrichtung zeichnet sich dadurch aus, dass sich im montierten Zustand Beschnittkanten eines Lückengrundes der Lücken des einen Einzelteils an den Laschen des anderen Teils anliegend abstützen. Hierdurch gelingt es, im Bereich des Durchgriffs der Laschen durch die Lücken der anderen Laschen eine Abstützung der Einzelteile zueinander zu gewährleisten und somit den - bereits weiter oben angesprochenen - kurzen Kraftflussweg zu realisieren.

Als zweckmäßig hat sich herausgestellt das einteilige Überbrückungselement oder die Einzelteile eines mehrteiligen Überbrückungselements als Stanzbiege- oder Stanzziehteile aus einem Metallblech auszubilden. Als zweckmäßige Materialstärke hat sich für das Metallblech eine Dicke von 0,1 mm bis 0,5 mm bewährt.

Als bevorzugte Wahl für einen Metallwerkstoff hat sich die Ausbildung des einteiligen Überbrückungselements oder die Ausbildung der Einzelteile eines mehrteiligen Überbrückungselements aus einem Federstahl bewährt.

Im Folgenden wird die Erfindung anhand der Zeichnung beispielhaft näher erläutert. Es zeigen:
- Figur 1:: eine Draufsicht auf einen Teilabschnitt eines Abschirmteils mit einer in einer Lochausnehmung mittels der erfindungsgemäßen Befestigungsvorrichtung befestigten Entkopplungsvorrichtung in einer ersten Ausführungsform;
- Figur 2:: schematisch einen Schnitt entlang der Linie A-A in Figur 1;
- Figur 3:: den Schnitt gemäß Figur 2, wobei sich die erfindungsgemäße Befestigungseinrichtung in einer Vormontagestellung befindet;
- Figur 4:: eine perspektivische Explosionsdarstellung einer zweiten Ausführungsform der erfindungsgemäßen Befestigungsvorrichtung in einer mehrteiligen Ausführungsform;
- Figur 5:: die Ausführungsform gemäß Figur 4 in einer perspektivischen Zusammenbaudarstellung zusammen mit einer Hülse in einer Vormontagestellung;
- Figur 6:: eine perspektivische Ansicht auf eine erste Außenseite des Abschirmteiles mit einer eingesetzten Entkopplungsvorrichtung, die mittels der erfindungsgemäßen Befestigungsvorrichtung in der zweiten Ausführungsform befestigt ist und
- Figur 7:: schematisch eine perspektivische Ansicht auf die zweite Außenseite des Abschirmteiles mit einer eingesetzten Entkopplungsvorrichtung, die mittels der erfindungsgemäßen Befestigungsvorrichtung in der zweiten Ausführungsform befestigt ist.
- Figur 8:: schematisch einen Schnitt entlang der Linie B-B aus Figur 7 durch ein Abschirmteil mit einer Entkopplungsvorrichtung aufweisend die erfindungsgemäße Befestigungsvorrichtung gemäß Figur 7.

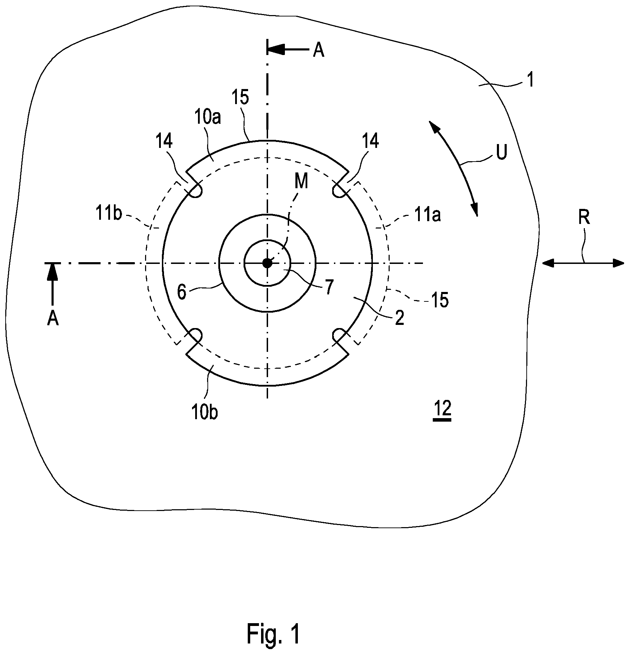

Im Folgenden wird anhand der Figuren 1 bis 3 eine erste Ausführungsform der Erfindung beispielhaft näher erläutert.

Ein Abschirmteil 1 ist üblicherweise als ein- oder mehrlagige ausgedehnte Metallblechlage, z. B. aus Aluminium oder Stahl, insbesondere Edelstahl ausgebildet. Ein solches Abschirmteil ist üblicherweise als Hitzeschild in Verwendung, wobei ein solches Hitzeschild beispielsweise im Bereich heißer Bauteile, z. B. Auspuffkrümmern, Katalysatoren, Turboladern oder dergleichen im Kfz-Bau zum Einsatz kommt. Eine Aufgabe eines derartigen Hitzeschildes ist es, abgestrahlte Wärme von für Wärmebeaufschlagung empfindlicheren Bauteilen in der Nähe des heißen Teiles abzuhalten.

Derartige Abschirmteile 1 sind im Betrieb neben einer Wärmebeaufschlagung üblicherweise auch einer Schwingungsbeaufschlagung ausgesetzt und weisen zur Befestigung des Abschirmteils 1 an einem Befestigungspartnerteil 3 zumindest eine, bevorzugt jedoch mehrere Entkopplungsvorrichtungen 2 auf. Als Befestigungspartnerteil 3 kommen sowohl die oben erwähnten heißen Bauteile, beispielsweise Turbolader oder dergleichen in Frage. Ebenso können die Abschirmteile 1 auch an Karosserieteilen oder anderen kühleren Bauteilen, die nicht wärmeabstrahlend sind, befestigt sein.

Die zumindest eine Entkopplungsvorrichtung 2 hat neben der Befestigungsfunktion im Wesentlichen die Aufgaben, mechanische Schwingungen des Abschirmteils 1 vom Befestigungspartnerteil 3 zu entkoppeln und im Bereich einer Befestigung einen Schiebesitz zwischen dem Abschirmteil 1 und dem Befestigungspartnerteil 3 zur Verfügung zu stellen, um Wärmedehnungen des Abschirmteils 1 ausgleichen zu können. Die Entkopplungsvorrichtungen 2 sitzen in einer Lochausnehmung 4 des Abschirmteils 1, wobei die Lochausnehmung 4 einen umlaufenden Lochrand 5 besitzt. Der Lochrand 5 ist dabei als an eine Lochbeschnittkante 5a der Lochausnehmung 4 radial außen angrenzender Bereich zu verstehen.

Die Entkopplungsvorrichtung 2 besitzt eine Hülse 6, welche eine Durchgangsöffnung 7 besitzt, durch die ein Befestigungsmittel, z. B. eine Schraube (nicht gezeigt) steckbar ist, wobei die Hülse 6 mit dem Befestigungsmittel am Befestigungspartnerteil 3 befestigbar ist. Die Hülse 6 ist mit einem Überbrückungselement 8 gekoppelt. Das Überbrückungselement 8 ist mittels der erfindungsgemäßen Befestigungsvorrichtung im Bereich des Lochrands 5 am Abschirmteil 1 festgelegt.

Die Hülse 6, insbesondere die Durchgangsöffnung 7 besitzt eine Mittelachse M. Eine Richtung parallel zur Mittelachse M sei als Axialrichtung A definiert. Eine Richtung orthogonal zur Mittelachse M sei als Radialrichtung R definiert. Dabei ist eine Orientierung der Radialrichtung R von der Mittelachse M weg als "radial nach außen" definiert. Eine Orientierung in Radialrichtung R auf die Mittelachse M zu oder näher bei dieser liegend wird im Folgenden als radial innen oder "radial weiter innen liegend" bezeichnet. Eine Umfangsrichtung U sei als Richtung konzentrisch um die Mittelachse M definiert, wobei eine Umfangsrichtung U keinen festgelegten radialen Abstand von der Mittelachse M besitzt.

Die erfindungsgemäße Befestigungsvorrichtung legt das Überbrückungselement 8 in der Axialrichtung A formschlüssig bezüglich des Lochrands 5 des Abschirmteils 1 fest. Sowohl in Radialrichtung R, wie auch in Umfangsrichtung U ist das Überbrückungselement 8 mittels der erfindungsgemäßen Befestigungsvorrichtung - wie weiter unten beschrieben - bevorzugt reibschlüssig am Abschirmteil 1 festgelegt, wobei der Reibschluss durch einen Klemmsitz des Überbrückungselements 8 am Abschirmteil 1 erzielt wird. Der Klemmsitz und somit der Reibschluss ist derart ausgebildet, dass das Überbrückungselement 8 für im Betrieb des Abschirmteils 1 auftretende Axialkräfte-, Radialkräfte oder Momente um die Mittelachse M bezüglich des Abschirmteils 1 festgelegt ist. Insoweit sind nachfolgende Ausführungen hinsichtlich einer Festlegung des Überbrückungselements 8 bezüglich des Abschirmteils 1 derart zu verstehen, dass das Entkopplungselement 2 hinsichtlich auftretender Kräfte in Axialrichtung A, Radialrichtung R oder Momente um die Mittelachse M, wie sie im bestimmungsgemäßen Betrieb des Abschirmteils 1 zu erwarten sind, ortsfest bezüglich des Abschirmteils 1 gelagert ist. Die Hülse 6 sitzt zweckmäßigerweise zur Ausbildung eines Schiebesitzes gegenüber dem Überbrückungselement 8 in Radialrichtung R mit Spiel im Überbrückungselement 8, so dass in der Radialrichtung R eine Relativbewegung des Überbrückungselements 8 relativ zur Hülse 6 ermöglicht ist. In Axialrichtung A ist die Hülse 6 zweckmäßigerweise spielfrei gegenüber dem Überbrückungselement 8 angeordnet. Das Überbrückungselement 8 ist hinsichtlich Axialkräften zwischen der Hülse 6 und dem Abschirmteil 1 federnd nachgiebig ausgebildet und wirkt somit federnd entkoppelnd.

Die erfindungsgemäße Befestigungsvorrichtung hält die Entkopplungsvorrichtung 2 im bestimmungsgemäßen Gebrauch des Abschirmteils 1 unbeweglich gegenüber dem Abschirmteil 1 fest. Eventuell auftretende Relativbewegungen der Hülse 6 gegenüber dem Abschirmteil 1 in Umfangsrichtung U und/oder in Radialrichtung R werden dadurch ausgeglichen, dass die Hülse 6 gegenüber dem Überbrückungselement 8 in Umfangsrichtung U, gegebenenfalls unter Überwindung von Reibkräften verdrehbar und in Radialrichtung R gegebenenfalls unter Überwindung von Reibungskräften verschiebbar angeordnet ist. Hierdurch erfolgt die Entkopplung der Hülse 6 gegenüber dem Abschirmteil 1. Wie bereits beschrieben erfolgt die Entkopplung der Hülse 6 gegenüber dem Abschirmteil 1 in Axialrichtung A durch eine federnd nachgiebige Ausgestaltung des Überbrückungselements 8.

Zur Ausbildung der erfindungsgemäßen Befestigungsvorrichtung besitzt das Überbrückungselement 8 radial außen als Verbindungsmittel mindestens vier Laschen 10a, 10b; 11a, 11b. Eine erste Teilmenge von mindestens zwei Laschen 10a, 10b des Überbrückungselements 8 sind zur Anlage an einer ersten Außenseite 12 des Abschirmteils 1, insbesondere im Bereich des Lochrandes 5 bevorzugt in unmittelbarer radial äußerer Umgebung um die Lochbeschnittkante 5a vorgesehen. Eine verbleibende Restmenge von mindestens zwei Laschen 11a, 11b sind zur Anlage an einer zur ersten Außenseite 12 gegenüberliegenden zweiten Außenseite 13 des Abschirmteils 1 vorgesehen. In einem bestimmungsgemäß fertig montierten Zustand liegen die Laschen 10a, 10b der Teilmenge auf der ersten Außenseite 12 des Abschirmteils 1 im Bereich des Lochrandes 5 an. Zudem liegen die Laschen 11a, 11b der Restmenge im bestimmungsgemäß fertig montierten Zustand an der zweiten Außenseite 13 des Abschirmteils 1 im Bereich des Lochrandes 5 an. Die Laschen 10a, 10b der Teilmenge und die Laschen 11a, 11b der Restmenge bilden dabei einen Klemmsitz für den Lochrand 5 des Abschirmteils 1, wobei in Umfangsrichtung U gesehen auf eine der Laschen 10a, 10b der Teilmenge eine der Laschen 11a, 11b der Restmenge folgt und auf eine der Laschen 11a, 11b der Restmenge erneut eine der Laschen 10a, 10b der Teilmenge folgt.

Die Laschen 10a, 10b der Teilmenge und die Laschen 11a, 11b der Restmenge sind jeweils einstückig mit dem Überbrückungselement 8 verbunden und im Ausführungsbeispiel gemäß der Figuren 1 bis 3 (in Umfangsrichtung U gesehen) abwechselnd aufeinanderfolgend angeordnet.

Zwischen zwei benachbarten Laschen 10a, 11b; 11b, 10b; 10b, 11a und 11a, 10a sind Freischnitte 14 vorhanden. Die Freischnitte 14 ermöglichen es, die Laschen 10a, 10b der Teilmenge in Richtung zur ersten Außenseite 12 gekröpft versetzt anzuordnen und die Laschen 11a, 11b in Richtung zur zweiten Außenseite 13 gekröpft versetzt bezüglich des Überbrückungselements 8 anzuordnen. In radialer Richtung R erstrecken sich die Freischnitte 14 von einem radialen Außenrand 15 des Überbrückungselements 8 radial nach innen bis in einen Bereich radial innerhalb der Lochbeschnittkante 5a der Lochausnehmung 4.

Die vorbeschriebene Ausführungsform der erfindungsgemäßen Befestigungsvorrichtung zeigt eine Möglichkeit, die Befestigungsvorrichtung aus einem einstückigen und insbesondere einlagigen Überbrückungselement 8, welches beispielsweise eine im Wesentliche scheibenförmige Raumform besitzt, auszubilden. Dies stellt eine besonders einfache Möglichkeit zur Verwirklichung der erfindungsgemäßen Befestigungsvorrichtung zur Befestigung einer Entkopplungsvorrichtung 2 an einem Lochrand 5 eines Abschirmteils 1 dar. Ein solches einteiliges, insbesondere einlagiges Überbrückungselement 8 kann in einfacher Art und Weise als Stanzbiegeteil oder Stanzziehteil aus einem Metallblech ausgebildet werden. Als bevorzugte Materialstärken haben sich Blechdicken von 0,1 mm bis 0,5 mm herausgestellt. Als zweckmäßigen Werkstoff für die Ausbildung eines solchen einteiligen Überbrückungselements 8 hat sich z.B. ein Edelstahl mit der Werkstoffnummer 1.4301 herausgestellt. Dieser Werkstoff zeichnet sich durch eine hohe Umformbarkeit bei geringer Rückstell- und/oder Rückfederneigung aus. Dies ist - wie nachfolgend beschrieben - für die Montage der Entkopplungsvorrichtung 2 bzw. für die Verbindung des Überbrückungselements 8 am Lochrand 5 von besonderem Vorteil.

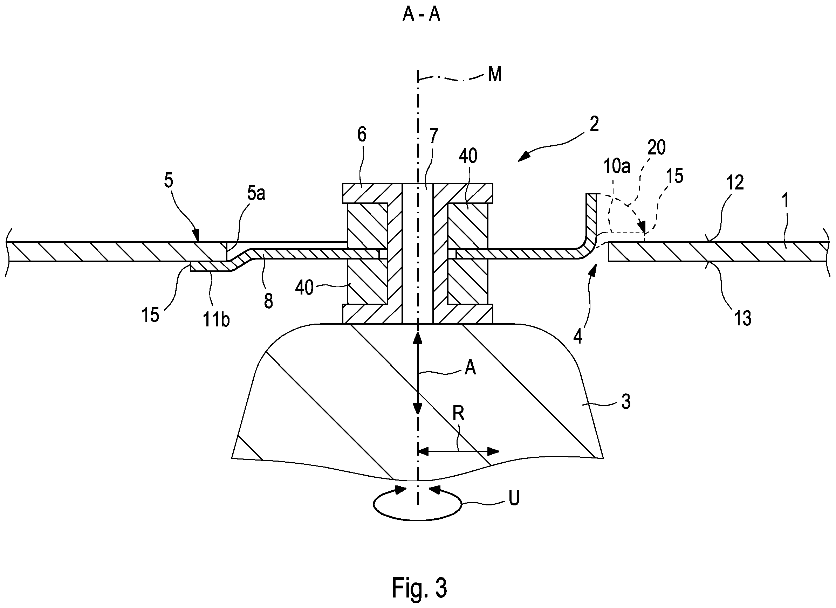

Zum Zwecke der Montage einer Entkopplungsvorrichtung 2 aufweisend die erfindungsgemäße Befestigungsvorrichtung sind in einer Vormontagestellung der Entkopplungsvorrichtung entweder die Laschen 10a, 10b der Teilmenge oder die Laschen 11a, 11b der Restmenge radial einwärts abgebogen angeordnet (siehe Figur 3). In dieser Vormontagestellung erstrecken sich die radial einwärts abgebogenen Laschen 10a, 10b im Wesentlichen in Axialrichtung A. In der in Figur 3 dargestellten Vormontagestellung ist das Entkopplungselement 2 in einer Montagerichtung V von der zweiten Außenseite 13 des Abschirmteils 1 her in die Lochausnehmung 4 einsetzbar. Hierbei durchgreifen die Laschen 10a, 10b der Teilmenge die Lochausnehmung 4. Die Entkopplungsvorrichtung 2 wird derart weit entlang der Montagerichtung V in die Lochausnehmung 4 eingeführt, bis die radial nach außen abgehenden Laschen 11a, 11b der Restmenge an der zweiten Außenseite 13 anliegen. Zur Herstellung der ordnungsgemäßen Befestigung der Entkopplungsvorrichtung 2 bezüglich des Abschirmteils 1 werden nach dem Einsetzen der vormontierten Entkopplungsvorrichtung 2 die radial einwärts abgebogenen Laschen 10a, 10b der Teilmenge entlang einer Pfeilrichtung 20 radial nach außen umgeklappt und zur klemmenden Anlage mit der ersten Außenseite 12 des Abschirmteils gebracht. Zur Gewährleistung eines ausreichend festen Klemmsitzes zwischen dem Lochrand 5 und den Laschen 10a, 10b sowie 11a, 11b werden die Laschen 10a, 10b sowie 11a, 11b mittels eines geeigneten Presswerkzeuges und ausreichend hoher Presskraft im Bereich des Lochrandes 5 gegen das Abschirmteil 1 gepresst. Die Intensität der Anpressung ist dabei derart zu wählen, dass zu erwartende Betriebskräfte in Radialrichtung R wie auch zu erwartende Momente um die Mittelachse M, die im Betrieb zwischen dem Überbrückungselement 8 und dem Abschirmteil 1 auftreten können, zuverlässig vom Klemmsitz aufgenommen werden können.

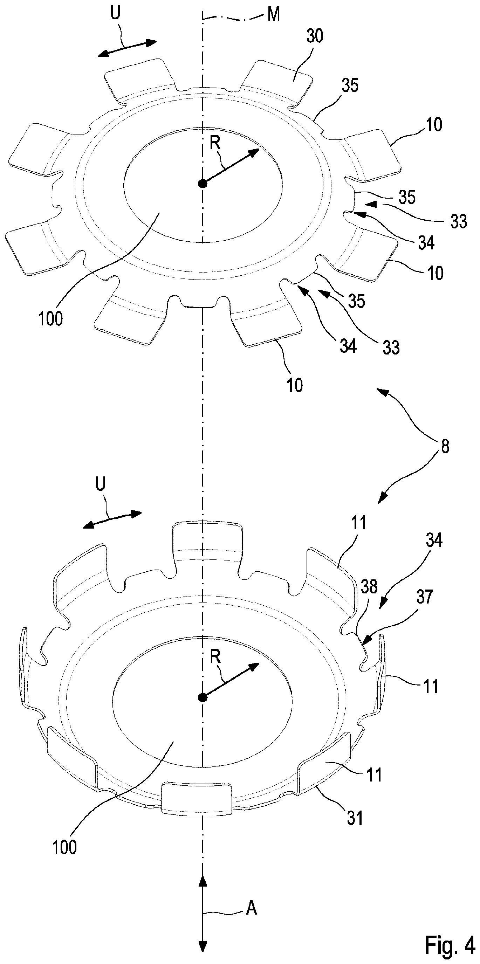

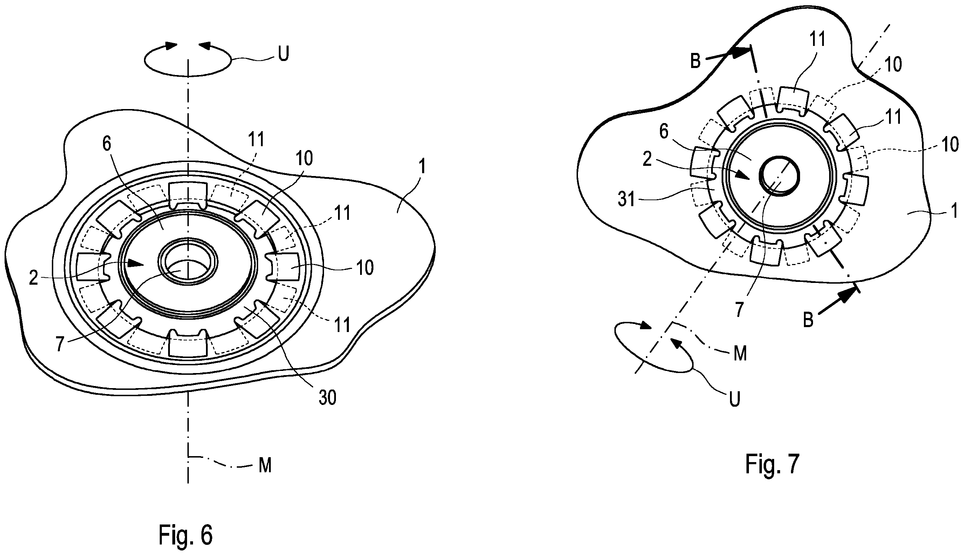

Im Folgenden wird anhand der Figuren 4 bis 8 eine zweite Ausführungsform der erfindungsgemäßen Befestigungsvorrichtung am Beispiel einer zweiten Ausführungsform einer Entkopplungsvorrichtung 2 beschrieben. Ein wesentlicher Unterschied der Ausführungsform gemäß Figuren 4 bis 8 im Vergleich zur Ausführungsform gemäß Figuren 1 bis 3 ist, dass die Entkopplungsvorrichtung 2 mehrteilig aus einem ersten Einzelteil 30 und einem zweiten Einzelteil 31 gebildet ist. Das erste Einzelteil 30 besitzt die Laschen 10a, 10b, die die Teilmenge bilden. Am zweiten Einzelteil 31 sind die Laschen 11 der Restmenge gebildet. Im Ausführungsbeispiel gemäß Figuren 4 bis 8 besitzen das erste und das zweite Einzelteil 30, 31 jeweils acht Laschen 10, 11.

Am Beispiel des ersten Ausführungsbeispiels wurde erläutert, dass mindestens zwei Laschen 10 und mindestens zwei Laschen 11 vorhanden sein müssen.

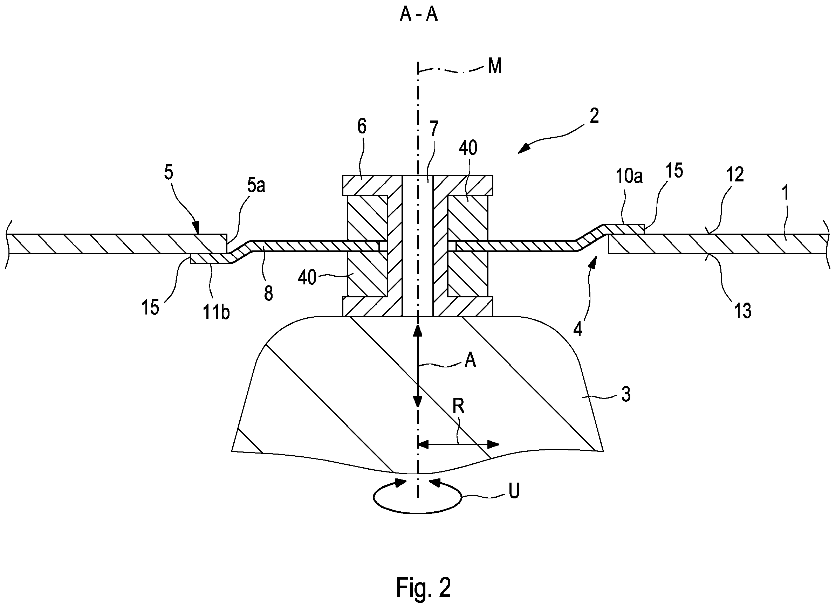

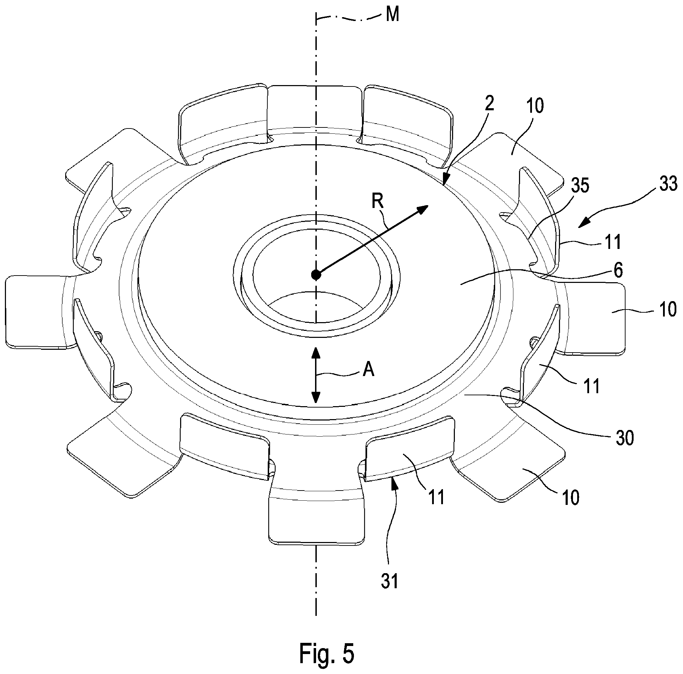

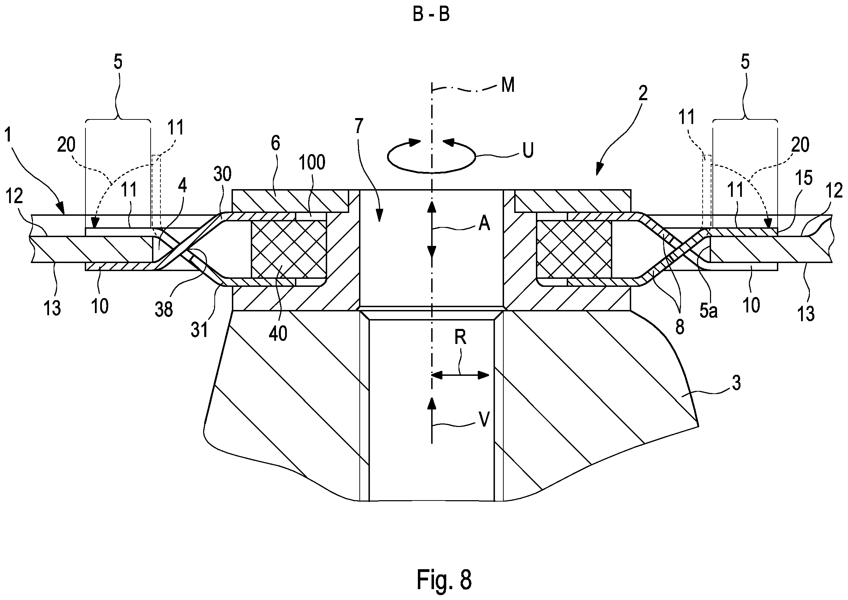

Selbstverständlich können auch jeweils mehr als zwei, im vorliegenden Beispiel insbesondere acht Laschen 10 die Teilmenge bilden und acht Laschen 11 des zweiten Einzelteils 31 die Restmenge bilden. Zwischen je zwei Laschen 10 des ersten Einzelteils 30 sind Lücken 33 vorhanden. Die Lücken 33 besitzen im Bereich des Lückengrundes 34 freie Beschnittkanten 35. Die Lücken 33 haben in Umfangsrichtung U gesehen mindestens eine derart groß bemessene lichte Weite, dass die Laschen 11 des zweiten Einzelteils 31, wenn - wie nachfolgend beschrieben - zwei Einzelteile 30, 31 gegeneinander gesetzt werden, die Lücken 33 axial und radial durchgreifen können. Korrespondierend zum ersten Einzelteil 30 sind zwischen je zwei Laschen 11 des zweiten Einzelteils 31 eine Lücke 36 vorhanden, an deren Lückengrund 37 freie Beschnittkanten 38 vorliegen. Die Lücken 36 des zweiten Einzelteils 31 sind dabei in Umfangsrichtung U so bemessen, dass Laschen 10 des ersten Einzelteils 30 die Lücken 36 in einer Axial- wie in einer Radialrichtung R durchgreifen können. Die Einzelteile 30, 31 weisen analog zum Überbrückungselement 8 der ersten Ausführungsform eine Durchgangsöffnung 100 auf, die geeignet ist, eine Hülse 6 (gezeigt in Figur 5) mit radialem Spiel und axial spielfrei aufzunehmen. In einem solchen montierten Zustand sind Beschnittkanten 35 von Lücken 33 des ersten Einzelteils 30 gegen Laschen 11 des zweiten Einzelteils 31 gesetzt. Ebenso sind Beschnittkanten 38 der Lücken 36 des zweiten Einzelteils 31 in einem montierten Zustand der Entkopplungsvorrichtung 2 gemäß Figur 5 gegen Laschen 10 des ersten Einzelteils 30 gesetzt. In der vorbeschriebenen Lage sind die Einzelteile 30, 31 in Axialrichtung A vorgespannt durch die Hülse 6 verbunden. Eine Außenansicht auf eine solche vormontierte Entkopplungsvorrichtung 2 zeigt Figur 5. In dieser Vormontagestellung sind die Laschen 10 radial nach außen weisend angeordnet. Die Laschen 11 der Restmenge, die im Ausführungsbeispiel gemäß Figuren 4 bis 8 vom zweiten Einzelteil 31 gebildet werden, sind radial nach innen gebogen abgewinkelt und erstrecken sich zumindest in deren Endbereich in Axialrichtung A (vergleiche Figuren 4 und 5). Eine solche Vormontagestellung ist in Figur 8 gestrichelt gezeichnet. Analog zum Ausführungsbeispiel gemäß der Figuren 1 bis 3 sind zur Montage der Entkopplungsvorrichtung 2 im Abschirmteil 1 die Laschen 11 in Pfeilrichtung 20 umzubiegen, wenn die Entkopplungsvorrichtung 2 in der Montagerichtung V in die Lochausnehmung 4 des Abschirmteils 1 eingesetzt wurde und die Laschen 10 an der zweiten Außenseite 13 zur Anlage gebracht wurden. Analog zur Ausführungsform gemäß Figuren 1 bis 3 werden die Laschen 10 der Teilmenge und 11 der Restmenge auch bei einer Ausführungsform gemäß Figuren 2 bis 8 zur festen Montage am Abschirmteil 1 verpresst, sodass zwischen den Laschen 10, 11 das Abschirmteil 1, insbesondere dessen Lochrand 5 mit einem Klemmsitz gehalten ist. Der Klemmsitz ist dabei hinsichtlich seiner Intensität so gewählt, dass Kräfte, die im Betrieb üblicherweise und erwartbar auftreten, über den Klemmsitz auf das Abschirmteil 1 übertragbar sind.

Beim Ausführungsbeispiel gemäß Figur 4 wird die Befestigungsvorrichtung gemäß der Erfindung aus insgesamt zwei Einzelteilen 30, 31, die jeweils Laschen 10, 11 tragen, gebildet. Die Einzelteile 30, 31 sind im Querschnitt radial innerhalb der Beschnittkanten 35, 38 im Wesentlichen nach Art einer Tellerfeder ausgebildet. Die Einzelteile 30, 31 sind dabei derart in Axialrichtung A gegeneinandergesetzt, dass sie in einem radial äußeren Bereich, das heißt im Bereich der Beschnittkanten 35, 38, aneinander liegen und radial innerhalb in Axialrichtung A beabstandet zueinander angeordnet sind. Diesen axialen Abstand überbrückend ist die Hülse 6 vorgesehen, welche die Einzelteile 30, 31 in Axialrichtung A gegeneinander vorspannt. Die axiale Vorspannung, gegebenenfalls unter Zwischenschaltung eines Abstandshalterelementes 40 (vergleiche Figur 8) ist dabei derart gewählt, dass die Hülse 6 sich innerhalb des Spieles gegenüber der Öffnung 100 in Radialrichtung R bewegen kann. Hierdurch ist zwischen der Hülse 6 und den Einzelteilen 30, 31 ein Schiebesitz gebildet. Gegebenenfalls ist die Hülse 6 innerhalb des Spieles bezüglich der Entkopplungsvorrichtung 2 gebildet aus dem ersten Einzelteil 30 und dem zweiten Einzelteil 31 gegen eine bestimmte Reibkraft verschieblich. Diese Reibkraft ist durch unterschiedlich gewählte Vorspannung der Hülse 6, mit der die Einzelteile 30, 31 gegeneinander vorgespannt werden, vorwählbar.

Zweckmäßigerweise sind die Einzelteile 30, 31 des Überbrückungselements 8 aus einem gut verformbaren Edelstahl, beispielsweise aus dem Werkstoff 1.4301, ausgebildet.

Bei der erfindungsgemäßen Befestigungsvorrichtung zur Befestigung einer Entkopplungsvorrichtung bezüglich eines Lochrands eines Abschirmteils ist von besonderem Vorteil, dass der Klemmsitz, welcher durch die abwechselnd auf einer Außenseite und der anderen Außenseite des Abschirmteils angeordneten Laschen gebildet ist in einem lokal begrenzten Bereich des Überbrückungselements angeordnet ist. Dieser lokal begrenzte Bereich ist vorteilhafterweise der radial äußerste Bereich des Überbrückungselements. Reaktionskräfte, die durch die Ausbildung des Klemmsitzes entstehen, werden mit einem sehr kurzen Kraftfluss innerhalb des radial äußeren Bereiches des Überbrückungselements, in dem die Laschen angeordnet sind aufgenommen. Radial weiter innen liegende Bereiche des Überbrückungselements sind an der Aufnahme von Reaktionskräften, die zur Ausbildung des Klemmsitzes erforderlich sind nicht oder nur unwesentlich beteiligt. Bei der Ausführungsform gemäß der Figuren 1 bis 3, also der einlagigen Ausführungsform des Überbrückungselements 8 werden die Reaktionskräfte im radial äußeren Bereich des Überbrückungselements 8, in dem die Laschen angeordnet sind vom Material des Überbrückungselements aufgenommen. Bei der zweiteiligen Ausführungsform des Überbrückungselements 8 gemäß Figuren 4 bis 8 erfolgt der Kraftfluss von einer Lasche 30 ein Stück radial nach innen und erfolgt im weiteren Verlauf über die Schnittkanten 35, 38 die sich an direkt benachbarten Laschen des anderen Einzelteils abstützen ebenfalls über einen sehr kurzen Weg. Radial weiter innenliegende Bereiche des Überbrückungselements 8 beziehungsweise dessen Einzelteile 30, 31 sind an der Kraftübertragung der Reaktionskräfte die im Randbereich entstehen nicht oder nur untergeordnet beteiligt. Dieser eröffnet eine Freiheit z.B. in der Wahl des Durchmessers der Öffnung 100, was große konstruktive Freiheiten zur konstruktiven Gestaltung eines Radialspiels der Hülse 6 gegenüber dem Überbrückungselement 8 ermöglicht.

## Patentansprüche

1. Befestigungsvorrichtung zur Befestigung einer Entkopplungsvorrichtung (2) bezüglich eines Lochrands (5) einer Lochausnehmung (4) eines Abschirmteils (1) wobei die Entkopplungsvorrichtung (2) zur schwingungsentkoppelnden Verbindung einer Hülse (6) mit dem Abschirmteil (1) zumindest ein Überbrückungselement (8) besitzt, welches an seinem radialen Außenrand (15) Verbindungsmittel zum befestigenden Verbinden des Überbrückungselements (8) mit dem Lochrand (5) des Abschirmteils (1) aufweist,
die Verbindungsmittel mindestens vier Laschen (10a, 10b; 11a, 11b; 10, 11) umfassen, die vom Überbrückungselement (8) radial nach außen abgehen, wobei
eine Teilmenge von mindestens zwei Laschen (10, 10a, 10b) des Überbrückungselements (8) zur Anlage an einer ersten Außenseite (12) des Abschirmteils (1) vorgesehen ist,
**dadurch gekennzeichnet, dass**
eine verbleibende Restmenge von mindestens zwei Laschen (11, 11a, 11b) zur Anlage an einer gegenüberliegenden zweiten Außenseite (13) des Abschirmteils (1) vorgesehen ist und der Lochrand (5) mit den Laschen (10, 10a, 10b) der Teilmenge und den Laschen (11, 11a, 11b) der Restmenge mit einem Klemmsitz bezüglich der Entkopplungsvorrichtung (2) festlegbar ist.

2. Befestigungsvorrichtung nach Anspruch 1,
**dadurch gekennzeichnet, dass**
das Überbrückungselement (8) einteilig, insbesondere einteilig und einlagig aus einer Metallblechlage ausgebildet ist und sowohl die Laschen (10, 10a, 10b) der Teilmenge wie auch die Laschen (11, 11a, 11b) der Restmenge zueinander in einer Umfangsrichtung (U) abwechselnd aufeinanderfolgend angeordnet sind und einstückig mit dem Überbrückungselement (8) verbunden sind.

3. Befestigungsvorrichtung nach Anspruch 2,
**dadurch gekennzeichnet, dass**
das Überbrückungselement (8) mehrteilig aus zumindest einem ersten Einzelteil (30) und einem zweiten Einzelteil (31) ausgebildet ist, wobei das erste Einzelteil (30) die Laschen (10, 10a, 10b) der Teilmenge bildet und das zweite Einzelteil (31) die Laschen (11, 11a, 11b) der Restmenge bildet.

4. Befestigungsvorrichtung nach Anspruch 3,
**dadurch gekennzeichnet, dass**
in der Umfangsrichtung (U) gesehen benachbarte Laschen (10, 10a, 10b) des ersten Einzelteils (30) und in der Umfangsrichtung (U) gesehen benachbarte Laschen (11, 11a, 11b) des zweiten Einzelteils (31) jeweils zumindest zwei Lücken (33, 36) bilden, wobei die zumindest zwei Lücken (33) zwischen Laschen (10, 10a, 10b) des ersten Einzelteils (30) radial und/oder axial von den Laschen (11, 11a, 11b) des zweiten Einzelteils (31) durchgriffen sind und wobei die zumindest zwei Lücken (36) zwischen Laschen (11, 11a, 11b) des zweiten Einzelteils (31) radial und/oder axial von Laschen (10, 10a, 10b) des ersten Einzelteils (30) durchgriffen sind.

5. Befestigungsvorrichtung nach einem der vorangegangenen Ansprüche,
**dadurch gekennzeichnet, dass**
in einer Vormontagestellung der Entkopplungsvorrichtung (2) die Laschen (10, 10a, 10b) der Teilmenge oder die Laschen (11, 11a, 11b) der Restmenge radial einwärts abgebogen sind, sodass sie Entkopplungsvorrichtung (2) in die Lochausnehmung (5) im Abschirmteil (1) derart einsteckbar ist, dass die anderen sich radial nach außen erstreckenden Laschen (10, 10a, 10b) an der zugehörigen Außenseite (12) des Abschirmteils (1) zur Anlage bringbar sind.

6. Befestigungsvorrichtung nach Anspruch 5,
**dadurch gekennzeichnet, dass**
die in der Vormontagestellung des Entkopplungselements (2) radial einwärts abgebogenen Laschen (10, 10a, 10b) durch Umbiegen der Laschen (10, 10a, 10b) radial nach außen mit ihrer zugehörigen Außenseite (12) zur Anlage bringbar sind und so der Klemmsitz bildbar ist.

7. Befestigungsvorrichtung nach einem der vorangegangenen Ansprüche,
**dadurch gekennzeichnet, dass**
die Laschen (10, 10a, 10b) der Teilmenge und die Laschen (11, 11a, 11b) der Restmenge im Umfangsrichtung (U) gesehen abwechselnd aufeinander folgend angeordnet sind.

8. Befestigungsvorrichtung nach einem der Ansprüche 3-7, **dadurch gekennzeichnet, dass**
sich im montierten Zustand Beschnittkanten (35, 38) eines Lückengrundes (34, 37) der Lücken (33, 36) des einen Einzelteils (30, 31) an den Laschen (10, 11) des anderen Einzelteils (30, 31) anliegend abstützen.

9. Befestigungsvorrichtung nach einem der Ansprüche 2-8, **dadurch gekennzeichnet, dass**
das einteilige Überbrückungselement (8) oder die Einzelteile (30, 31) als Stanzbiegeteile oder Stanzziehteile aus einem Metallblech mit einer Materialstärke von 0,1 mm bis 0,5 mm ausgebildet sind.

10. Befestigungsvorrichtung nach einem der vorangegangenen Ansprüche,
**dadurch gekennzeichnet, dass**
das einteilige Überbrückungselement (8) oder die Einzelteile (30, 31) aus einem Edelstahl gebildet sind, insbesondere aus dem Edelstahl 1.4301 ausgebildet sind.

11. Entkopplungsvorrichtung aufweisend eine Befestigungsvorrichtung nach einem der Ansprüche 1 bis 10.

12. Abschirmteil aufweisend eine Entkopplungsvorrichtung nach Anspruch 11.

## Claims

1. A securing device for securing a decoupling device (2) relative to a hole edge (5) of a hole socket (4) of a shielding part (1); the decoupling device (2) has at least one bridging element (8), which is for the vibration-decoupling connection of a sleeve (6) to the shielding part (1) and which at its radial outer edge (15) has connecting means for the secured connection of the bridging element (8) to the hole edge (5) of the shielding part (1); the connecting means have at least four tabs (10a, 10b; 11a, 11b; 10, 11) that protrude radially outward from the bridging element (8); and a subset of at least two tabs (10, 10a, 10b) of the bridging element (8) is provided for contacting a first outside (12) of the shielding part (1),
**characterized in that**
a remainder of at least two tabs (11, 11a, 11b) is provided for contacting an opposite second outside (13) of the shielding part (1) and by means of the tabs (10, 10a, 10b) of the subset and the tabs (11, 11a, 11b) of the remainder, it is possible to immobilize the hole edge (5) relative to the decoupling device (2) by means of a force fit.

2. The securing device according to claim 1,
**characterized in that**
the bridging element (8) is embodied of one piece, particularly of one piece and one layer composed of one sheet metal layer, and both the tabs (10, 10a, 10b) of the subset and the tabs (11, 11a, 11b) of the remainder are positioned one after another in alternating fashion in a circumference direction (U) and are integrally connected to the bridging element (8).

3. The securing device according to claim 2,
**characterized in that**
the bridging element (8) is embodied of several parts including at least one first individual part (30) and a second individual part (31); the first individual part (30) forms the tabs (10, 10a, 10b) of the subset; and the second individual part (31) forms the tabs (11, 11a, 11b) of the remainder.

4. The securing device according to claim 3,
**characterized in that**
tabs (10, 10a, 10b) of the first individual part (30) that are adjacent viewed in the circumference direction (U) and tabs (11, 11a, 11b) of the second individual part (31) that are adjacent viewed in the circumference direction (U) respectively form at least two gaps (33, 36); the tabs (11, 11a, 11b) of the second individual part (31) radially and/or axially penetrate the at least two gaps (33) between tabs (10, 10a, 10b) of the first individual part (30); and the tabs (10, 10a, 10b) of the first individual part (30) radially and/or axially penetrate the at least two gaps (36) between tabs (11, 11a, 11b) of the second individual part (31).

5. The securing device according to one of the preceding claims,
**characterized in that**
in a preassembly position of the decoupling device (2), the tabs (10, 10a, 10b) of the subset or the tabs (11, 11a, 11b) of the remainder are bent radially inward so that the decoupling device (2) can be inserted into the hole socket (4) in the shielding part (1) in such a way that the other tabs (10, 10a, 10b) extending radially outward can be brought into contact with the associated outside (12) of the shielding part (1).

6. The securing device according to claim 5,
**characterized in that**
the tabs (10, 10a, 10b) that are bent radially inward in the preassembly position of the decoupling device (2) can be brought into contact with the associated outside (12) by bending the tabs (10, 10a, 10b) radially outward, thus making it possible to produce the force fit.

7. The securing device according to one of the preceding claims,
**characterized in that**
the tabs (10, 10a, 10b) of the subset and the tabs (11, 11a, 11b) of the remainder are positioned one after another in alternating fashion viewed in the circumference direction (U).

8. The securing device according to one of claims 3-7,
**characterized in that**
in the assembled state, cut edges (35, 38) of a gap bottom (34, 37) of the gaps (33, 36) of the first individual part (30, 31) are supported resting against the tabs (10, 11) of the other individual part (30, 31).

9. The securing device according to one of claims 2-8,
**characterized in that**
the one-piece bridging element (8) or the individual parts (30, 31) are embodied in the form of stamped-and-bent parts or stamped-and-drawn parts composed of a sheet metal with a material thickness of 0.1 mm to 0.5 mm.

10. The securing device according to one of the preceding claims,
**characterized in that**
the one-piece bridging element (8) or the individual parts (30, 31) are made of a stainless steel, in particular of 1.4301 stainless steel.

11. A decoupling device having a securing device according to one of claims 1 to 10.

12. A shielding part having a decoupling device according to claim 11.

## Revendications

1. Dispositif de fixation pour la fixation d'un dispositif de découplage (2) par rapport à un bord de trou (5) d'un évidement formant trou (4) d'une pièce de protection (1), dans lequel
le dispositif de découplage (2) présente au moins un élément de pontage (8) pour la liaison de découplage des vibrations d'un manchon (6) avec la pièce de protection (1), élément qui présente sur son bord extérieur radial (15) des moyens de liaison pour la liaison par fixation de l'élément de pontage (9) avec le bord de trou (5) de la pièce de protection (1),
les moyens de liaison comprennent au moins quatre pattes (10a, 10b ; 11a, 11b ; 10, 11) qui s'étendent radialement vers l'extérieur depuis l'élément de pontage (8),
une quantité partielle d'au moins deux pattes (10, 10a, 10b) de l'élément de pontage (8) est prévue pour être appliquée contre une première face extérieure (12) de la pièce de protection (1),
**caractérisé en ce que**
une quantité résiduelle restante d'au moins deux pattes (11, 11a, 11b) est prévue pour être appliquée contre une deuxième face extérieure (13) opposée de la pièce de protection (1), et le bord de trou (5) peut être immobilisé avec ajustement serré par rapport au dispositif de découplage (2) à l'aide des pattes (10, 10a, 10b) de la quantité partielle et des pattes (11, 11a, 11b) de la quantité résiduelle.

2. Dispositif de fixation selon la revendication 1,
**caractérisé en ce que**
l'élément de pontage (8) est réalisé d'une seule pièce, en particulier d'une seule pièce et d'une seule couche à partir d'une couche de tôle métallique, et aussi bien les pattes (10, 10a, 10b) de la quantité partielle que les pattes (11, 11a, 11b) de la quantité résiduelle sont disposées successivement en alternance dans une direction périphérique (U) et sont reliées d'un seul tenant à l'élément de pontage (8).

3. Dispositif de fixation selon la revendication 2,
**caractérisé en ce que**
l'élément de pontage (8) est formé en plusieurs parties à partir d'au moins une première partie individuelle (30) et d'une deuxième partie individuelle (31), la première partie individuelle (30) formant les pattes (10, 10a, 10b) de la quantité partielle et la deuxième partie individuelle (31) formant les pattes (11, 11a, 11b) de la quantité résiduelle.

4. Dispositif de fixation selon la revendication 3,
**caractérisé en ce que**
des pattes (10, 10a, 10b) voisines, vues en direction périphérique (U), de la première partie individuelle (30), et des pattes (11, 11a, 11b) voisines, vues en direction périphérique (U), de la deuxième partie individuelle (31) forment respectivement au moins deux lacunes (33, 36), lesdites au moins deux lacunes (33) entre les pattes (10, 10a, 10b) de la première partie individuelle (30) étant traversées radialement et/ou axialement par les pattes (11, 11a, 11b) de la deuxième partie individuelle (31), et lesdites au moins deux lacunes (36) entre les pattes (11, 11a, 11b) de la deuxième partie individuelle (31) étant traversées radialement et/ou axialement par les pattes (10, 10a, 10b) de la première partie individuelle (30).

5. Dispositif de fixation selon l'une des revendications précédentes,
**caractérisé en ce que**
dans une position de pré-montage du dispositif de découplage (2), les pattes (10, 10a, 10b) de la quantité partielle ou les pattes (11, 11a, 11b) de la quantité résiduelle sont repliées radialement vers l'intérieur, de sorte que le dispositif de découplage (2) peut être enfiché dans l'évidement formant trou (4) dans la pièce de protection (1) de telle sorte que les autres pattes (10, 10a, 10b) s'étendant radialement vers l'extérieur peuvent être amenées en appui contre la face extérieure associée (12) de la pièce de protection (1).

6. Dispositif de fixation selon la revendication 5,
**caractérisé en ce que**
les pattes (10, 10a, 10b) repliées radialement vers l'intérieur dans la position de pré-montage de l'élément de découplage (2) peuvent être amenées en appui contre la face extérieure associée (12) par repliage des pattes (10, 10a, 10b) radialement vers l'extérieur pour ainsi former l'ajustement serré.

7. Dispositif de fixation selon l'une des revendications précédentes,
**caractérisé en ce que**
les pattes (10, 10a, 10b) de la quantité partielle et les pattes (11, 11a, 11b) de la quantité résiduelle sont disposées successivement en alternance, vues en direction périphérique (U).

8. Dispositif de fixation selon l'une des revendications 3 à 7,
**caractérisé en ce que**
dans l'état monté, des arêtes de coupe (35, 38) d'un fond de lacune (34, 37) des lacunes (33, 36) de l'une des parties individuelles (30, 31) s'appliquent en appui contre les pattes (10, 11) de l'autre partie individuelle (30, 31).

9. Dispositif de fixation selon l'une des revendications 2 à 8,
**caractérisé en ce que**
l'élément de pontage (8) réalisé d'une seule pièce ou les parties individuelles (30, 31) sont réalisés sous forme de pièces pliées poinçonnées ou de pièces embouties poinçonnées en une tôle métallique d'une épaisseur de 0,1 mm à 0,5 mm.

10. Dispositif de fixation selon l'une des revendications précédentes,
**caractérisé en ce que**
l'élément de pontage (8) réalisé d'une seule pièce ou les parties individuelles (30, 31) sont constitués en acier inoxydable, en particulier en acier inoxydable 1.4301.

11. Dispositif de découplage comprenant un dispositif de fixation selon l'une des revendications 1 à 10.

12. Pièce de protection comprenant un dispositif de découplage selon la revendication 11.
